# EUROPÄISCHE PATENTSCHRIFT

(11) **EP 3 429 866 B1**
(45) Veröffentlichungstag und Bekanntmachung des Hinweises auf die Patenterteilung: **11.10.2023**
(21) Anmeldenummer: 17711590.4
(22) Anmeldetag: 09.03.2017
(51) Int. Cl.: B42D 25/305

(54) **AUTHENTIFIKATIONSDOKUMENT**
AUTHENTICATION DOCUMENT
DOCUMENT D'AUTHENTIFICATION

(30) Priorität: 16.03.2016 DE 102016104867
(43) Veröffentlichungstag der Anmeldung: 23.01.2019
(73) Patentinhaber: Bundesdruckerei GmbH, 10969 Berlin (DE)
(72) Erfinder: WOLF, Andreas, 13158 Berlin (DE)
(74) Vertreter: Patentship Patentanwaltsgesellschaft mbH
(86) Internationale Anmeldenummer: PCT/EP2017/055564
(87) Internationale Veröffentlichungsnummer: WO 2017/157757

(56) Entgegenhaltungen:
- EP-A1- 1 866 845
- EP-A2- 1 986 868
- DE-A1- 19 539 355
- DE-A1-102010 020 460

## Beschreibung

Die vorliegende Erfindung betrifft ein Authentifikationsdokument und ein Dokumentenlesegerät für ein Authentifikationsdokument.

Die Offenlegungsschrift EP 1 986 868 A2 offenbart ein Dokument, wie zum Beispiel ein Wert- oder Sicherheitsdokument.

Die Offenlegungsschrift DE 19 539 355 A1 offenbart ein Verfahren zur Echtheitsprüfung eines Datenträgers.

Die Offenlegungsschrift EP 1 866 845 A1 offenbart einen Datenträger umfassend einen Chip.

Die Offenlegungsschrift DE 10 2010 020 460 A1 offenbart ein Dokument mit einem RFID-IC und einer Antennenspule mit einem RFID-Lesegerät und einer RFID-Funkschnittstelle.

Ein Authentifikationsdokument, beispielsweise ein Identifikationsdokument wie eine ID-Karte oder eine Smartcard, ist häufig einer Person zugeordnet und kann zum Authentifizieren der Person verwendet werden. Beispielsweise ist in dem Authentifikationsdokument ein biometrisches Referenzmerkmal der Person gespeichert, welches mittels einer Authentifikationsvorrichtung mit einem biometrischen Merkmal der Person verglichen wird.

Zur Authentifizierung des Authentifikationsdokuments, beispielsweise mittels einer optischen Erfassung einer maschinenlesbaren Zone auf einer Oberfläche des Authentifikationsdokuments, werden häufig Dokumentenlesegeräte verwendet. Ein solches Dokumentenlesegerät nimmt hierzu beispielsweise mittels eines Bildsensors eine Bildaufnahme des Authentifikationsdokuments auf.

Für die Bildaufnahme des Authentifikationsdokuments sollte hierbei möglichst ein direkter Kontakt zwischen dem Bildsensor des Dokumentenlesegerätes und dem Authentifikationsdokument bestehen. Ferner sollten der Abstand und die Ausrichtung des Bilddetektors zu der Oberfläche des Authentifikationsdokuments möglichst bei jeder Erfassung gleich sein, was in der Praxis oft schwer zu realisieren ist.

Ein Dokumentenlesegerät wie ein Kartenlesegerät umfasst neben dem Bildsensor meist zusätzlich eine Beleuchtungseinrichtung zur Beleuchtung der Oberfläche des Authentifikationsdokuments. Der Bildsensor und die Beleuchtungseinrichtung können aufgrund des benötigten Strahlengangs des Beleuchtungslichts einen erheblichen Bauraum in dem Dokumentenlesegerät beanspruchen.

Es ist daher die Aufgabe der vorliegenden Erfindung, ein effizientes Konzept zur für ein Authentifikationsdokument, welches besonders effizient erfasst und authentifiziert werden kann, zu schaffen.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt betrifft die Erfindung ein Authentifikationsdokument, mit einem Dokumentenkörper mit einer Dokumentenoberfläche, wobei die Dokumentenoberfläche ein Dokumentenmerkmal des Authentifizierungsdokumentes aufweist, einer lichttransparenten Schicht, welche auf der Dokumentenoberfläche des Dokumentenkörpers angeordnet ist, wobei die lichttransparente Schicht einen Bilddetektor für eine Bildaufnahme des Dokumentenmerkmals aufweist; und einer Kommunikationsschnittstelle zum Ausgeben der Bildaufnahme. Dadurch wird der Vorteil erreicht, dass ein Authentifikationsdokument geschaffen werden kann, welches effizient mittels einer Bildaufnahme seiner Dokumentenoberfläche authentifiziert werden kann. Da der Bilddetektor für die Bildaufnahme in das Authentifikationsdokument integriert ist, können Vorrichtungen zur Auswertung des Authentifikationsdokuments, insbesondere Kartenlesegeräte, besonders einfach aufgebaut sein, und können insbesondere kostengünstig hergestellt werden.

Das Authentifikationsdokument kann eine ID-Karte oder eine Smartcard, sein. Das Authentifikationsdokument kann ferner eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Authentifikationsdokument kann ferner einen elektronisch auslesbaren Schaltkreis, beispielsweise einen RFID-Chip umfassen. Das Authentifikationsdokument kann ein- oder mehrlagig bzw. papier- und/oder kunststoffbasiert sein. Das Authentifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Die Kommunikationsschnittstelle kann durch einen RFID-Chip implementiert sein, oder einen RFID-Chip umfassen. Die Kommunikationsschnittstelle kann ferner eine Antenne umfassen, welche entlang einem Umfang des Dokumentenkörpers verläuft. Die Kommunikationsschnittstelle kann kommunikationstechnisch mit dem Bilddetektor verbunden sein, um die Bildaufnahme des Dokumentenmerkmals zu empfangen.

Gemäß einer Ausführungsform ist der Bilddetektor in der lichttransparenten Schicht angeordnet, insbesondere eingebettet. Dadurch wird der Vorteil erreicht, dass eine besonders effiziente und detaillierte Bildaufnahme der Dokumentenoberfläche erfolgen kann.

Gemäß einer Ausführungsform umfasst der Bilddetektor eine Mehrzahl von Lichtsensoren, insbesondere Fotodioden, eine Fotodioden-Schicht oder eine Transistorschicht. Dadurch wird der Vorteil erreicht, dass der Bilddetektor besonders kompakte geometrische Abmessungen aufweisen kann. Der Bilddetektor bzw. die Lichtsensoren können teiltransparent sein. Die Transistorschicht kann eine TFT-Schicht umfassen. Der Bilddetektor kann ferner eine Auflösung von zumindest 500 dpi aufweisen.

Der Bilddetektor kann ausgebildet sein, eine Bildaufnahme des Dokumentenmerkmals oder eines Abschnitts der Dokumentenoberfläche, welche das Dokumentenmerkmal aufweist, aufzunehmen. Der Bilddetektor kann ferner ausgebildet sein, eine Bildaufnahme der kompletten Dokumentenoberfläche aufzunehmen.

Gemäß einer Ausführungsform ist jeder Lichtsensor des Bilddetektors ausgebildet, an einem Abschnitt der Dokumentenoberfläche reflektiertes oder gestreutes Beleuchtungslicht zu detektieren, wobei jeder Lichtsensor ferner ausgebildet ist, ein Detektionssignal auszugeben, wenn eine Intensität des detektierten Beleuchtungslichts einen Schwellwert überschreitet. Dadurch wird der Vorteil erreicht, dass eine effiziente Bildaufnahme der Dokumentenoberfläche bzw. des Dokumentenmerkmals auf der Dokumentenoberfläche erfolgen kann.

Die Bildaufnahme kann eine binäre Bildaufnahme, insbesondere eine Schwarzweiß-Bildaufnahme, der Dokumentenoberfläche bzw. des Dokumentenmerkmals auf der Dokumentenoberfläche umfassen. Die binäre Bildaufnahme kann zwei Helligkeitswerte bzw. Farben aufweist, wobei der erste Helligkeitswert, beispielsweise die Farbe Weiß, einem vorhandenen Detektionssignal eines Lichtsensors entspricht, und wobei der zweite Helligkeitswert, beispielsweise die Farbe Schwarz, einem fehlenden Detektionssignal eines Lichtsensors entspricht. Die Bildaufnahme kann insbesondere eine gerasterte Bildaufnahme umfassen.

Gemäß einer Ausführungsform ist der Bilddetektor ausgebildet, die Bildaufnahme des Dokumentenmerkmals bei Durchleuchten der lichttransparenten Schicht mit Beleuchtungslicht aufzunehmen. Dadurch wird der Vorteil erreicht, dass eine effiziente Bildaufnahme des Dokumentenmerkmals aufgenommen werden kann. Der Bilddetektor kann ferner ausgebildet sein, an der Oberfläche des Dokumentenkörpers, insbesondere an dem Dokumentenmerkmal, reflektiertes, gebrochenes und/oder gestreutes Beleuchtungslicht zu erfassen.

Gemäß einer Ausführungsform ist die lichttransparente Schicht aus einem transparenten Kunststoff, insbesondere Polycarbonat, aus einer transparenten Lackschicht oder aus Glas gebildet. Dadurch wird der Vorteil erreicht, dass das Authentifikationsdokument eine hohe mechanische Flexibilität aufweisen kann, und/oder besonders kostengünstig hergestellt werden kann.

Gemäß einer Ausführungsform weist das Beleuchtungslicht einen Wellenlängenbereich, insbesondere einen Infrarot-Wellenlängenbereich, einen Ultraviolett-Wellenlängenbereich oder einen Weißlicht-Wellenlängenbereich, auf, wobei die lichttransparente Schicht in dem Wellenlängenbereich lichttransparent ist. Dadurch wird der Vorteil erreicht, dass eine besonders effiziente Bildaufnahme des Dokumentenmerkmals des Authentifikationsdokuments aufgenommen werden kann. Je nach Wellenlängenbereich des Beleuchtungslichts können unterschiedliche Dokumentenmerkmale in der Bildaufnahme sichtbar gemacht werden. Beispielsweise kann das Dokumentenmerkmal nur bei Beleuchtung mit Infrarot- oder UV-Licht sichtbar sein. Weist das Beleuchtungslicht den entsprechenden Wellenlängenbereich auf, so kann eine effiziente Bildaufnahme des Dokumentenmerkmals erfolgen.

Gemäß einer Ausführungsform ist der Bilddetektor zur Bildaufnahme in dem Wellenlängenbereich des Beleuchtungslichts ausgebildet. Der Bilddetektor kann einen Infrarotbildsensor, einen Bildsensor für sichtbares Licht oder einen Bildsensor für UV-Licht umfassen.

Gemäß einer Ausführungsform bedeckt die lichttransparente Schicht die Oberfläche des Dokumentenkörpers vollständig oder abschnittsweise. Dadurch wird der Vorteil erreicht, dass eine effiziente Bildaufnahme des Dokumentenmerkmals erfolgen kann.

Gemäß einer Ausführungsform ist die lichttransparente Schicht von einem Rahmen umgeben, wobei der Rahmen auf der Dokumentenoberfläche angeordnet ist, oder von der Dokumentenoberfläche gebildet wird, oder ist die lichttransparente Schicht in eine Trägerschicht eingebettet, wobei die Trägerschicht auf der Dokumentenoberfläche angeordnet ist. Dadurch wird der Vorteil erreicht, dass eine besonders effiziente und stabile Anbringung der lichttransparenten Schicht auf der Dokumentenoberfläche erfolgen kann. Der Rahmen und/oder die Trägerschicht können aus einem lichttransparenten, teiltransparenten oder lichtundurchlässigen Material ausgebildet sein. Die lichttransparente Schicht kann mit dem Rahmen und/oder der Trägerschicht mittels einer stoffschlüssigen und/oder einer formschlüssigen Verbindung verbunden sein. Der Rahmen kann entlang einem Umfang des Dokumentenkörpers verlaufen.

Gemäß einer Ausführungsform umfasst oder formt die Dokumentenoberfläche eine weitere lichttransparente Schicht, oder ist zwischen der Dokumentenoberfläche und der lichttransparenten Schicht eine weitere lichttransparente Schicht angeordnet, beispielsweise um einen Abstand zwischen der Dokumentenoberfläche und dem Bilddetektor zu erhöhen. Dadurch wird der Vorteil erreicht, dass eine besonders effiziente Bildaufnahme des Dokumentenmerkmals erfolgen kann.

Aufgrund des größeren Abstandes zwischen dem Bilddetektor und der Dokumentenoberfläche kann ein Abdecken bzw. Abschatten der Dokumentenoberfläche durch die Lichtsensoren des Bilddetektors vermieden werden und es kann mehr Beleuchtungslicht die Dokumentenoberfläche erreichen. Ferner kann ein Strahlengang des an der Dokumentenoberfläche reflektierten oder gestreuten Beleuchtungslichts zum Bilddetektor verlängert werden, beispielsweise um eine fokussierte Bildaufnahme des Dokumentenmerkmals durch den Bilddetektor zu ermöglichen oder um einen Bildaufnahmebereich der einzelnen Lichtsensoren des Bilddetektors auf der Dokumentenoberfläche zu erhöhen.

Gemäß einer Ausführungsform umfasst das Dokumentenmerkmal eines der folgenden Merkmale: eine maschinenlesbare Zone, ein Passbild, insbesondere ein Passbild eines Besitzers des Authentifikationsdokuments, ein Sicherheitsmerkmal wie ein Hologramm, ein Sicherheitsfaden oder ein Wasserzeichen, eine Beschriftung.

Gemäß einer Ausführungsform ist die Kommunikationsschnittstelle ausgebildet, ein Bildaufnahmesignal zu empfangen, wobei die Kommunikationsschnittstelle ausgebildet ist, den Bilddetektor ansprechend auf das Empfangen des Bildaufnahmesignals zur Bildaufnahme der Oberfläche des Dokumentenkörpers anzusteuern. Dadurch wird der Vorteil erreicht, dass die Bildaufnahme des Dokumentenmerkmals effizient aufgenommen werden kann.

Gemäß einer Ausführungsform umfasst das Authentifikationsdokument eine Energieversorgungsschnittstelle, zur drahtlosen, insbesondere induktiven, Versorgung des Bilddetektors mit elektrischer Energie. Dadurch wird der Vorteil erreicht, dass der Bilddetektor effizient mit Energie versorgt werden kann. Die Energieversorgungsschnittstelle kann ferner ausgebildet sein, weitere Komponenten des Authentifikationsdokuments, insbesondere die Kommunikationsschnittstelle, mit elektrischer Energie zu versorgen.

Die Energieversorgungsschnittstelle kann wie die Kommunikationsschnittstelle durch einen RFID-Chip implementiert sein, oder einen RFID-Chip umfassen.

Gemäß einem zweiten Aspekt betrifft die Erfindung ein Dokumentenlesegerät für ein Authentifikationsdokument, wobei das Authentifikationsdokument einen Dokumentenkörper mit einer Dokumentenoberfläche umfasst, wobei die Dokumentenoberfläche ein Dokumentenmerkmal des Authentifizierungsdokumentes aufweist; wobei das Authentifikationsdokument ferner eine lichttransparente Schicht umfasst, welche auf der Dokumentenoberfläche des Dokumentenkörpers angeordnet ist, wobei die lichttransparente Schicht einen Bilddetektor für eine Bildaufnahme des Dokumentenmerkmals aufweist; und wobei das Authentifikationsdokument eine Kommunikationsschnittstelle zum Ausgeben der Bildaufnahme umfasst, wobei das Dokumentenlesegerät die folgenden Merkmale aufweist: eine Auflage zum Auflegen des Authentifikationsdokuments; eine Beleuchtungseinrichtung, welche ausgebildet ist, die lichttransparente Schicht des Authentifikationsdokuments mit Beleuchtungslicht zu durchleuchten, und eine Kommunikationsschnittstelle, welche ausgebildet ist, die Bildaufnahme des Dokumentenmerkmals von dem Authentifikationsdokument zu empfangen. Dadurch wird der Vorteil erreicht, dass das Authentifikationsdokument effizient für die Bildaufnahme beleuchtete werden kann. Ferner kann das Authentifikationsdokument oder eine dem Authentifikationsdokument zugeordnete Person effizient von dem Dokumentenlesegerät auf der Basis der Bildaufnahme des Dokumentenmerkmals authentifiziert werden. Das Authentifikationsdokument kann ein Authentifikationsdokument nach dem ersten Aspekt der Erfindung sein.

Das Dokumentenlesegerät kann ein Element eines Computers, eines Laptops, eines Mobiltelefons oder eines Smartphones sein. Ferner kann das Dokumentenlesegerät ein Element eines Zugriffskontrollsystems oder eines Zugangskontrollsystems sein.

Die Beleuchtungseinrichtung kann eine Anzahl von LEDs oder Laserdioden, oder eine Leuchtfolie zum Erzeugen des Beleuchtungslichts umfassen. Die Beleuchtungseinrichtung kann das Beleuchtungslicht in einem vorbestimmten Wellenlängenbereich, insbesondere einem Infrarot-, UV- oder Weißlichtwellenlängenbereich ausstrahlen.

Die Kommunikationsschnittstelle des Dokumentenlesegeräts kann die Bildaufnahme des Dokumentenmerkmals des Authentifikationsdokuments über eine Kommunikationsverbindung mit der Kommunikationsschnittstelle des Authentifikationsdokuments empfangen.

Gemäß einer Ausführungsform ist die Beleuchtungseinrichtung ausgebildet, strukturiertes Beleuchtungslicht zu erzeugen, wobei das strukturierte Beleuchtungslicht eine Struktur, insbesondere eine räumliche Intensitätsverteilung, aufweist, wobei die Beleuchtungseinrichtung ausgebildet ist, zur Beleuchtung der Dokumentenoberfläche die lichttransparente Schicht mit dem strukturierten Beleuchtungslicht zu durchleuchten. Dadurch wird der Vorteil erreicht, dass das Dokumentenmerkmal auf der Dokumentenoberfläche effizient zur Bildaufnahme in der Struktur des strukturierten Beleuchtungslichts beleuchtet werden kann.

Gemäß einer Ausführungsform ist die Kommunikationsschnittstelle ausgebildet, ein Bildaufnahmesignal auszusenden, um das Authentifikationsdokument zur Bildaufnahme anzusteuern. Dadurch wird der Vorteil erreicht, dass die Bildaufnahme des Dokumentenmerkmals effizient aufgenommen werden kann. Das Aussenden des Bildaufnahmesignals kann beispielsweise von einem Benutzer der Dokumentenlesevorrichtung ausgelöst werden, um einen Authentifizierungsvorgang zu initiieren.

Gemäß einer Ausführungsform umfasst Dokumentenlesegerät einen Prozessor, wobei der Prozessor ausgebildet ist, das Dokumentenmerkmal in der empfangenen Bildaufnahme zu erfassen, und das Authentifikationsdokument oder eine dem Authentifikationsdokument zugeordnete Person auf der Basis des erfassten Dokumentenmerkmals zu authentifizieren. Dadurch wird der Vorteil erreicht, dass das Authentifikationsdokument oder eine dem Authentifikationsdokument zugeordnete Person effizient authentifiziert werden kann. Der Prozessor kann kommunikationstechnisch mit der Kommunikationsschnittstelle verbunden sein, um die Bildaufnahme des Dokumentenmerkmals zu empfangen.

Durch die Authentifizierung des Authentifikationsdokuments und/oder der dem Authentifikationsdokument zugeordneten Person werden das Authentifikationsdokument und/oder die Person authentifiziert. Die Authentifizierung der Person kann eine Identifizierung der Person und/oder eine Verifizierung der Identität der Person umfassen. Die Authentifizierung des Authentifikationsdokuments kann eine Verifizierung des Authentifikationsdokuments, insbesondere eine Verifizierung einer Echtheit des Authentifikationsdokuments, umfassen.

Gemäß einer Ausführungsform umfasst das Dokumentenlesegerät einen Speicher, in welchem Referenzmerkmale gespeichert sind, wobei der Prozessor ausgebildet ist, das Dokumentenmerkmal mit den im Speicher gespeicherten Referenzmerkmalen zu vergleichen, um das Authentifikationsdokument oder eine dem Authentifikationsdokument zugeordnete Person zu authentifizieren. Dadurch wird der Vorteil erreicht, dass das Authentifikationsdokument oder eine dem Authentifikationsdokument zugeordnete Person effizient authentifiziert werden kann. Der Speicher kann ein lokaler Speicher, insbesondere ein Flash-Speicher, in dem Dokumentenlesegerät sein. Der Speicher kann ferner ein externer Speicher, insbesondere ein Netzwerkspeicher oder ein Speicher auf einem Server, sein, mit welchem das Dokumentenlesegerät kommunikationstechnisch über ein Kommunikationsnetzwerk verbunden ist.

Gemäß einer Ausführungsform ist die Kommunikationsschnittstelle des Dokumentenlesegeräts ausgebildet, ein Beleuchtungslichtsignal zu empfangen, wobei das Beleuchtungslichtsignal einen vorgegebenen Wellenlängenbereich angibt, wobei die Kommunikationsschnittstelle ausgebildet ist, die Beleuchtungseinrichtung zum Ausstrahlen des Beleuchtungslichtes in dem vorgegebenen Wellenlängenbereich anzusteuern. Dadurch wird der Vorteil erreicht, eine effiziente Beleuchtung der Oberfläche des Authentifikationsdokuments zu Bildaufnahme erfolgen kann.

Gemäß einer Ausführungsform umfasst das eine Energieversorgungsschnittstelle, welche ausgebildet ist, eine drahtlose, insbesondere induktive, elektrische Verbindung mit einer Energieversorgungsschnittstelle des Authentifikationsdokuments herzustellen, um den Bilddetektor des Authentifikationsdokuments mit elektrischer Energie zu versorgen. Dadurch wird der Vorteil erreicht, dass das Authentifikationsdokuments effizient mit elektrischer Energie versorgt werden kann.

Die Erfindung kann in Software und/oder Hardware realisiert werden.

Weitere Ausführungsformen der vorliegenden Erfindung werden Bezug nehmend auf die beigefügten Zeichnungen beschrieben. Es zeigen:
- Fig. 1: eine schematische Darstellung eines Authentifikationsdokuments;
- Fig. 2: eine schematische Darstellung eines Dokumentenlesegeräts für ein Authentifikationsdokument; und
- Fig. 3: eine schematische Darstellung eines Authentifikationsdokuments, welches mittels einer externen Beleuchtungsvorrichtung beleuchtet wird.

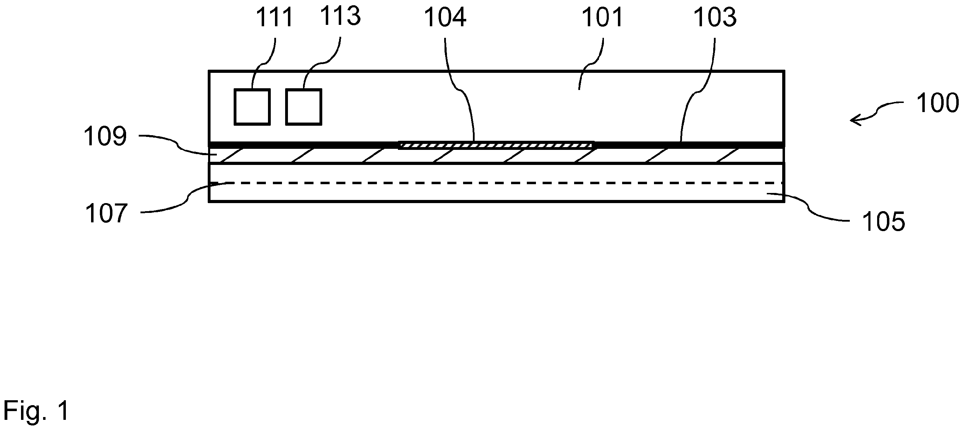

Fig. 1 zeigt eine schematische Darstellung eines Authentifikationsdokuments 100 gemäß einer Ausführungsform.

Das Authentifikationsdokument 100 umfasst einen Dokumentenkörper 101 mit einer Dokumentenoberfläche 103, wobei die Dokumentenoberfläche 103 ein Dokumentenmerkmal 104 des Authentifizierungsdokumentes 100 aufweist, eine lichttransparenten Schicht 105, welche auf der Dokumentenoberfläche 103 des Dokumentenkörpers 101 angeordnet ist, wobei die lichttransparente Schicht 105 einen Bilddetektor 107 für eine Bildaufnahme des Dokumentenmerkmals 104 aufweist, und eine Kommunikationsschnittstelle 111 zum Ausgeben der Bildaufnahme.

Das Authentifikationsdokument 100 kann eine ID-Karte oder eine Smartcard, sein. Das Authentifikationsdokument 100 kann ferner eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Authentifikationsdokument 100 kann ferner einen elektronisch auslesbaren Schaltkreis, beispielsweise einen RFID-Chip umfassen. Das Authentifikationsdokument 100 kann ein- oder mehrlagig bzw. papier- und/oder kunststoffbasiert sein. Das Authentifikationsdokument 100 kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Die Kommunikationsschnittstelle 111 kann durch einen RFID-Chip implementiert sein, oder einen RFID-Chip umfassen. Die Kommunikationsschnittstelle 111 kann ferner eine Antenne umfassen, welche entlang einem Umfang des Dokumentenkörpers 101 verläuft. Die Kommunikationsschnittstelle 111 kann kommunikationstechnisch mit dem Bilddetektor 107 verbunden sein, um die Bildaufnahme des Dokumentenmerkmals 104 zu empfangen.

Der Bilddetektor 107 kann in der lichttransparenten Schicht 105 angeordnet sein, insbesondere eingebettet sein. Der Bilddetektor 107 kann dabei eine Mehrzahl von Lichtsensoren, insbesondere Fotodioden, oder eine Fotodioden-Schicht oder eine Transistorschicht, aufweisen. Der Bilddetektor 107 bzw. die Lichtsensoren können teiltransparent sein. Die Transistorschicht kann eine TFT-Schicht sein, welche insbesondere ein Array aus organischen Fotodioden umfasst. Das Array kann der lichttransparenten Schicht 105 in einer zum Dokumentenkörper 101 parallelen Ebene angeordnet sein. Der Bilddetektor 107 kann ferner als Prismensensor, als Zeilendetektor, als Linsen-Array-Detektor oder als CCD-Detektor ausgebildet sein. Der Bilddetektor 107 kann ferner eine Auflösung von zumindest 500 dpi aufweisen.

Der Bilddetektor 107 kann zu Bildaufnahme in einem sichtbaren Wellenlängenbereich, insbesondere Weißlicht-Wellenlängenbereich, ausgebildet sein. Der Bilddetektor 107 kann durch einen Farbfilter oder ein Farbfilter-Array bedeckt sein. Das Farbfilter-Array kann eine Bayer-Matrix umfassen, welche beispielsweise zu 50% für grünes Licht und zu jeweils 25% für rotes und blaues Licht transparent ausgebildet ist. Der Bilddetektor 107 mit dem Farbfilter kann als Bayer-Sensor ausgebildet sein.

Der Bilddetektor 107 kann ferner zur Bildaufnahme in einem Infrarot, insbesondere Nahinfrarot-Wellenlängenbereich, oder einen Ultraviolett-Wellenlängenbereich ausgebildet sein.

Der Bilddetektor 107 kann zur Bildaufnahme des Dokumentenmerkmals 104 in Richtung der Dokumentenoberfläche 103 ausgerichtet sein. Der Bilddetektor 107 kann eine Bildaufnahme des Dokumentenmerkmals 104 oder der Dokumentenoberfläche 103 mit dem Dokumentenmerkmal 104 aufnehmen.

Der Bilddetektor 107 kann ausgebildet sein, die Bildaufnahme des Dokumentenmerkmals 104 oder der Dokumentenoberfläche 103 mit dem Dokumentenmerkmal 104 bei Durchleuchten der lichttransparenten Schicht 105 mit Beleuchtungslicht aufzunehmen.

Jeder Lichtsensor des Bilddetektors 107 kann ausgebildet sein, an einem Abschnitt der Dokumentenoberfläche 103 reflektiertes und/oder gestreutes Beleuchtungslicht zu detektieren. Jeder Lichtsensor kann ferner ausgebildet sein, ein Detektionssignal auszugeben, wenn eine Intensität des detektierten Beleuchtungslichts einen Schwellwert überschreitet.

Die Bildaufnahme kann eine binäre Bildaufnahme, insbesondere eine Schwarzweiß-Bildaufnahme, des Dokumentenmerkmals 104 des Authentifikationsdokuments 100 umfassen. Die binäre Bildaufnahme kann zwei Helligkeitswerte bzw. Farben aufweist. Der erste Helligkeitswert, beispielsweise die Farbe Weiß, an einem Bildabschnitt der Bildaufnahme kann einem vorhandenen Detektionssignal eines Lichtsensors entsprechen, welcher den Bildabschnitt aufnimmt. Der zweite Helligkeitswert, beispielsweise die Farbe Schwarz, an einem weiteren Bildabschnitt der Bildaufnahme kann einem fehlenden Detektionssignal eines weiteren Lichtsensors entsprechen, welcher den weiteren Bildabschnitt aufnimmt. Die Bildaufnahme kann insbesondere eine gerasterte Bildaufnahme des Dokumentenmerkmals 104 oder der Dokumentenoberfläche 103 umfassen.

Die lichttransparente Schicht 105 kann aus einem transparenten Kunststoff, insbesondere Polycarbonat, aus einer transparenten Lackschicht oder aus Glas gebildet sein. Das Authentifikationsdokument 100 kann eine hohe mechanische Flexibilität aufweisen. Insbesondere können die mechanische Flexibilität der lichttransparenten Schicht 105 und die mechanische Flexibilität des Authentifikationsdokuments 100 gleich sein.

Die lichttransparente Schicht 105 kann, wie in Fig. 1 gezeigt, die Dokumentenoberfläche 103 des Dokumentenkörpers 101 vollständig bedecken. Ferner kann die lichttransparente Schicht 105 einen Abschnitt der Dokumentenoberfläche 103 bedecken.

Die lichttransparente Schicht 105 kann von einem Rahmen umgeben sein, wobei der Rahmen auf der Dokumentenoberfläche 103 angeordnet ist oder von der Dokumentenoberfläche 103 gebildet wird. Ferner kann die lichttransparente Schicht 105 in eine Trägerschicht eingebettet sein. Die Trägerschicht kann auf der Dokumentenoberfläche 103 des Dokumentenkörpers 101 angeordnet sein. Der Rahmen kann entlang einem Umfang des Dokumentenkörpers 101 verlaufen. Der Rahmen und/oder die Trägerschicht können aus einem lichttransparenten, teiltransparenten oder lichtundurchlässigen Material ausgebildet sein. Die lichttransparente Schicht 105 kann mit dem Rahmen oder der Trägerschicht mittels einer stoffschlüssigen und/oder einer formschlüssigen Verbindung verbunden sein.

Das Dokumentenmerkmal 104 kann eines der folgenden Merkmale umfassen: eine maschinenlesbare Zone, ein Passbild, insbesondere ein Passbild eines Besitzers des Authentifikationsdokuments, ein Sicherheitsmerkmal wie ein Hologramm, ein Sicherheitsfaden oder ein Wasserzeichen, eine Beschriftung, beispielsweise den Namen eines Besitzers des Authentifikationsdokuments 100 oder eine Seriennummer des Authentifikationsdokuments 100. Die Beschriftung kann eine Mikroschrift auf der Dokumentenoberfläche 103 umfassen. Das Dokumentenmerkmal 104 kann ferner in einer optisch variablen Farbe gedruckt sein. Die Farbe des Dokumentenmerkmals 104 in der Bildaufnahme kann von dem Wellenlängenbereich des Beleuchtungslichts abhängen.

Das Authentifikationsdokument 100 oder eine dem Authentifikationsdokument 100 zugeordnete Person können auf der Basis des Merkmals authentifiziert werden.

Durch die Authentifizierung des Authentifikationsdokuments 100 und/oder der dem Authentifikationsdokument 100 zugeordneten Person werden das Authentifikationsdokument 100 und/oder die Person authentifiziert. Die Authentifizierung der Person kann eine Identifizierung der Person und/oder eine Verifizierung der Identität der Person umfassen. Die Authentifizierung des Authentifikationsdokuments 100 kann eine Verifizierung des Authentifikationsdokuments 100, insbesondere eine Verifizierung einer Echtheit des Authentifikationsdokuments 100, umfassen.

Das Authentifikationsdokument 100 in Fig. 1 umfasst ferner eine weitere lichttransparente Schicht 109.

Die Dokumentenoberfläche 103 kann die weitere lichttransparente Schicht 109 umfassen oder formen. Ferner kann die weitere lichttransparente Schicht 109 zwischen der Dokumentenoberfläche 103 und der lichttransparenten Schicht 105 angeordnet sein.

Die weitere lichttransparente Schicht 109 kann einen Abstand zwischen der Dokumentenoberfläche 103, insbesondere dem Dokumentenmerkmal 104 auf der Dokumentenoberfläche 103, und dem Bilddetektor 107 erhöhen.

Aufgrund des größeren Abstandes zwischen dem Bilddetektor 107 und der Dokumentenoberfläche 103 kann ein Abdecken oder ein Abschatten der Dokumentenoberfläche 103 durch die Lichtsensoren des Bilddetektors 107 vermieden oder reduziert werden. Ferner kann ein Strahlengang des an der Dokumentenoberfläche 103, insbesondere am Dokumentenmerkmal 104, reflektierten und/oder gestreuten Beleuchtungslichts zum Bilddetektor 107 verlängert werden, beispielsweise um eine fokussierte Bildaufnahme des Dokumentenmerkmals 104 zu ermöglichen und/oder um einen Bildaufnahmebereich der einzelnen Lichtsensoren des Bilddetektors 107 auf der Dokumentenoberfläche 103 zu erhöhen.

Die Kommunikationsschnittstelle 111 kann ausgebildet sein, ein Bildaufnahmesignal zu empfangen. Das Bildaufnahmesignal kann beispielsweise von einem Dokumentenlesegerät oder einer Beleuchtungsvorrichtung ausgesendet werden. Die Kommunikationsschnittstelle 111 kann ausgebildet sein, den Bilddetektor 107 ansprechend auf das Empfangen des Bildaufnahmesignals zur Bildaufnahme des Dokumentenmerkmals 104 anzusteuern.

Das in Fig. 1 gezeigte Authentifikationsdokument 100 umfasst ferner eine Energieversorgungsschnittstelle 113.

Die Energieversorgungsschnittstelle 113 kann zur Versorgung des Authentifikationsdokuments 100, insbesondere des Bilddetektors 107, mit elektrischer Energie ausgebildet sein. Die Energieversorgungsschnittstelle 113 kann ausgebildet sein, eine drahtlose, insbesondere induktive, elektrische Verbindung mit einer Energieversorgungsschnittstelle einer Energiequelle herzustellen. Die Energiequelle kann beispielsweise ein Dokumentenlesegerät sein.

Die Energieversorgungsschnittstelle 113 und/oder die Kommunikationsschnittstelle 111 können durch einen RFID-Chip implementiert sein, oder einen RFID-Chip umfassen.

Gemäß einer Ausführungsform umfasst das Authentifikationsdokument 100 einen Prozessor. Der Prozessor kann ein Mikroprozessor sein. Der Prozessor kann ausgebildet sein, die Bildaufnahme des Dokumentenmerkmals 104 zu empfangen und das Dokumentenmerkmal 104 in der Bildaufnahme zu erfassen. Der Prozessor kann ferner auf der Basis des erfassten Dokumentenmerkmals 104 das Authentifikationsdokument 100 oder eine dem Authentifikationsdokument 100 zugeordnete Person authentifizieren. Der Prozessor kann kommunikationstechnisch mit dem Bilddetektor 107 verbunden sein, um die Bildaufnahme von dem Bilddetektor 107 zu empfangen.

Gemäß einer weiteren Ausführungsform umfasst das Authentifikationsdokument 100 einen Speicher. In dem Speicher können Referenzmerkmale gespeichert sein. Der Prozessor kann das Dokumentenmerkmal 104 mit den im Speicher gespeicherten Referenzmerkmalen vergleichen, um das Authentifikationsdokument 100 oder die dem Authentifikationsdokument 100 zugeordnete Person zu authentifizieren. Der Prozessor kann hierzu kommunikationstechnisch mit dem Speicher verbunden sein. Der Speicher kann ein lokaler Speicher, insbesondere ein Flash-Speicher, in dem Authentifikationsdokument 100 sein.

Der Prozessor und/oder der Speicher können ebenfalls durch den RFID-Chip implementiert sein, oder den RFID-Chip umfassen.

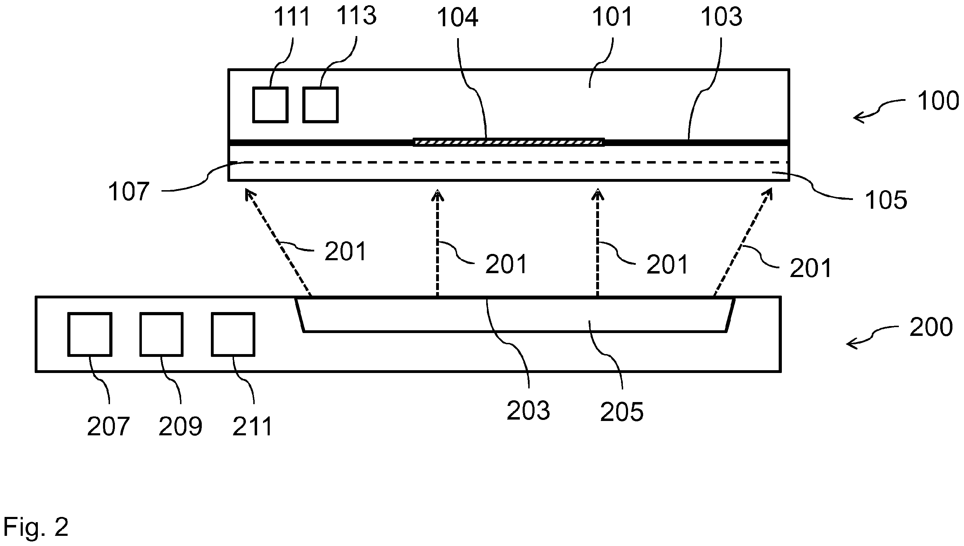

Fig. 2 zeigt eine schematische Darstellung eines Dokumentenlesegeräts 200 für das Authentifikationsdokument 100 gemäß einer Ausführungsform.

Das Authentifikationsdokument 100 ist in Fig. 2 über dem Dokumentenlesegerät 200 angeordnet. Die weitere lichttransparente Schicht 109 des Authentifikationsdokuments 100 ist in Fig. 2 nicht dargestellt.

Das Dokumentenlesegerät 200 umfasst eine Auflage 203 zum Auflegen des Authentifikationsdokuments 100, eine Beleuchtungseinrichtung 205, welche ausgebildet ist, die lichttransparente Schicht 105 des Authentifikationsdokuments mit Beleuchtungslicht 201 zu durchleuchten, und eine Kommunikationsschnittstelle 207, welche ausgebildet ist, die Bildaufnahme des Dokumentenmerkmals 104 von dem Authentifikationsdokument 100 zu empfangen.

Das Dokumentenlesegerät 200 kann ein Element eines Computers, eines Laptops, eines Mobiltelefons oder eines Smartphones sein. Ferner kann das Dokumentenlesegerät ein Element eines Zugriffskontrollsystems oder eines Zugangskontrollsystems sein.

Die Beleuchtungseinrichtung 205 kann eine Anzahl von LEDs oder Laserdioden, insbesondere ein Dioden-Array, oder eine Leuchtfolie zum Erzeugen des Beleuchtungslichts 201 umfassen. Die Beleuchtungseinrichtung 205 kann das Beleuchtungslicht 201 in einem vorbestimmten Wellenlängenbereich, insbesondere einem Infrarot-, UV- oder Weißlichtwellenlängenbereich ausstrahlen.

Die Kommunikationsschnittstelle 207 des Dokumentenlesegeräts 200 kann die Bildaufnahme des Dokumentenmerkmals 104 des Authentifikationsdokuments 100 über eine Kommunikationsverbindung mit der Kommunikationsschnittstelle 111 des Authentifikationsdokuments 100 empfangen.

Die Beleuchtungseinrichtung 205 kann ausgebildet sein, die Dokumentenoberfläche 103 bzw. das Dokumentenmerkmal 104 auf der Dokumentenoberfläche 103 bei Auflegen des Authentifikationsdokuments 100 auf die Auflage 203 mit dem Beleuchtungslicht 201 zu beleuchten. Neben dem direkten Auflegen des Authentifikationsdokuments 100 auf die Auflage 203 kann das Authentifikationsdokument 100 auch in einem festen Abstand über der Auflage 203, beispielsweise 1 cm, 2 cm, 3 cm, 4 cm oder 5 cm, angeordnet werden.

Die Beleuchtungseinrichtung 205 kann ferner ausgebildet sein, das Beleuchtungslicht 201 in einem Wellenlängenbereich, insbesondere einem Infrarot-Wellenlängenbereich, einem Ultraviolett-Wellenlängenbereich wie einem UV-A-Wellenlängenbereich, oder einem Weißlicht-Wellenlängenbereich, auszustrahlen. Die lichttransparente Schicht 105 und/oder die weitere lichttransparente Schicht 109 aus Fig. 1 können jeweils in dem Wellenlängenbereich des Beleuchtungslichts 201 lichttransparent oder teiltransparent ausgebildet sein.

Das Dokumentenlesegerät 200 kann eine Benutzerschnittstelle, insbesondere eine Eingabeeinrichtung wie ein Touch-Display, umfassen. Ein Benutzer des Dokumentenlesegeräts 200 kann beispielsweise den Wellenlängenbereich oder eine Intensität des Beleuchtungslichts 201 mittels der Benutzerschnittstelle einstellen.

Das Dokumentenmerkmal 104 kann bei der Beleuchtung der Dokumentenoberfläche 103 mit Beleuchtungslicht 201 in Abhängigkeit des Wellenlängenbereichs des Beleuchtungslichts 201 sichtbar sein. Beispielsweise ist das Dokumentenmerkmal 104 in einer optisch variablen Farbe gedruckt und erscheint in der Bildaufnahme je nach Wellenlängenbereich des Beleuchtungslichts 201 in unterschiedlichen Farben. Ferner kann das Dokumentenmerkmal 104 nur unter Infrarot- oder UV-Beleuchtungslicht sichtbar sein.

Ein Dokumentenmerkmal 104, welches nur bei Beleuchtung mit Beleuchtungslicht 201 in bestimmten Wellenlängenbereichen mit dem Bilddetektor 107 aufnehmbar ist, kann zur Prüfung der Authentizität des Authentifikationsdokuments 100, insbesondere zur Verifizierung der Echtheit des Authentifikationsdokuments 100, genutzt werden. Beispielsweise kann das Dokumentenlesegerät 200 das Authentifikationsdokument 100 gezielt mit Beleuchtungslicht 201 in einem UV-Wellenlängenbereich beleuchten, wobei Dokumentenoberfläche 103 des beleuchteten Dokumentenkörpers 101 ein nur unter UV-Licht sichtbares Dokumentenmerkmal 104 aufweist. Der Bilddetektor 107 des Authentifikationsdokuments 100 kann daraufhin eine Bildaufnahme des Dokumentenmerkmals 104 aufnehmen und an das Dokumentenlesegerät 200 aussenden. Der Bilddetektor 107 kann beispielsweise zur Bildaufnahme in dem UV-Wellenlängenbereich ausgebildet sein. Das Dokumentenlesegerät 200 bzw. ein Prozessor des Dokumentenlesegeräts 200 können daraufhin überprüfen, ob das entsprechende Dokumentenmerkmal 104 in der Bildaufnahme sichtbar ist. Fehlt das Dokumentenmerkmal 104 in der Bildaufnahme, so kann darauf geschlossen werden, dass entweder das Authentifikationsdokument 100 das Dokumentenmerkmal 104 nicht umfasst, oder, dass die übermittelte Bildaufnahme nicht bei Beleuchtung mit dem UV-Licht aufgenommen wurde. Als Folge kann eine Authentifizierung des Authentifikationsdokuments oder einer dem Authentifikationsdokument 100 zugeordneten Person verweigert werden.

Die Beleuchtungseinrichtung 205 kann ferner ausgebildet sein, strukturiertes Beleuchtungslicht 201 zu erzeugen, wobei das strukturierte Beleuchtungslicht 201 eine Struktur, insbesondere eine räumliche Intensitätsverteilung, aufweist. Die Beleuchtungseinrichtung 205 kann ausgebildet sein, die lichttransparente Schicht 105 des Authentifikationsdokuments 100 mit dem strukturierten Beleuchtungslicht 201 zu durchleuchten, um das Dokumentenmerkmal 104 auf der Dokumentenoberfläche 103 in der Struktur des strukturierten Beleuchtungslichts 201 zu beleuchten.

Das strukturierte Beleuchtungslicht 201 kann ebenfalls zur Prüfung der Authentizität des Authentifikationsdokuments 100 genutzt werden. So wird das Dokumentenmerkmal 104 aufgrund der Struktur des strukturierten Beleuchtungslichtes 201, welches beispielsweise eine für den Menschen nicht sichtbaren Wellenlängenbereich wie Infrarot oder UV aufweist, nur abschnittsweise beleuchtet und ist folglich nur abschnittsweise in der Bildaufnahme sichtbar. Ferner kann die Dokumentenoberfläche 103 weitere Dokumentenmerkmale aufweisen, welche in Abhängigkeit der Struktur des strukturierten Beleuchtungslichts 201 in der Bildaufnahme sichtbar oder nicht sichtbar sind. Das Dokumentenlesegerät 200 bzw. ein Prozessor des Dokumentenlesegeräts 200 können die sichtbaren Abschnitte des Dokumentenmerkmals 104 oder die sichtbaren weiteren Dokumentenmerkmale in der Bildaufnahme erfassen und beispielsweise mit der Struktur des Beleuchtungslichts 201 vergleichen.

Die Kommunikationsschnittstelle 207 kann ausgebildet sein, ein Bildaufnahmesignal auszusenden, um das Authentifikationsdokument 100 zur Bildaufnahme anzusteuern. Das Aussenden des Bildaufnahmesignals kann beispielsweise von einem Benutzer der Dokumentenlesevorrichtung 200 ausgelöst werden, um einen Authentifizierungsvorgang zu initiieren.

Die Kommunikationsschnittstelle 207 des Dokumentenlesegeräts 200 kann ferner ausgebildet, sein, ein Beleuchtungslichtsignal zu empfangen, wobei das Beleuchtungslichtsignal einen vorgegebenen Wellenlängenbereich angibt. Die Kommunikationsschnittstelle 207 kann ausgebildet sein, die Beleuchtungseinrichtung 205 zum Ausstrahlen des Beleuchtungslichtes 201 in dem vorgegebenen Wellenlängenbereich anzusteuern.

Das Dokumentenlesegerät 200 in Fig. 2 umfasst ferner einen Prozessor 209, einen Speicher 211 und eine Energieversorgungsschnittstelle 213.

Der Prozessor 209 kann kommunikationstechnisch mit der Kommunikationsschnittstelle 207 verbunden sein. Der Prozessor 209 kann ausgebildet sein, das Dokumentenmerkmal 104 in der empfangenen Bildaufnahme zu erfassen. Der Prozessor 209 kann ferner ausgebildet sein, das Authentifikationsdokument 100 oder eine dem Authentifikationsdokument 100 zugeordnete Person auf der Basis des Dokumentenmerkmals 104 zu authentifizieren, insbesondere zu identifizieren.

In dem Speicher 211 können Referenzmerkmale gespeichert sein, insbesondere in einer Datenbank gespeichert sein. Der Prozessor 209 kann ausgebildet sein, das Dokumentenmerkmal 104 mit den im Speicher 211 gespeicherten Referenzmerkmalen zu vergleichen, um das Authentifikationsdokument 100 oder eine dem Authentifikationsdokument 100 zugeordnete Person zu authentifizieren.

Der Speicher 211 kann einen lokaler Speicher, insbesondere einen Flash-Speicher, des Dokumentenlesegeräts 200 oder einen Speicher eines an das Dokumentenlesegerät 200 angeschlossenen Datenverarbeitungsgeräts, beispielsweise eines Computers oder Laptops, umfassen. Der Speicher 211 kann ferner einen externer Speicher, insbesondere einen Netzwerkspeicher oder einen Speicher auf einem Server, umfassen, mit welchem das Dokumentenlesegerät 200 kommunikationstechnisch über ein Kommunikationsnetzwerk verbunden ist.

Die Energieversorgungsschnittstelle 213 kann ausgebildet sein, eine drahtlose, insbesondere induktive, elektrische Verbindung mit einer Energieversorgungsschnittstelle 113 des Authentifikationsdokuments 100 herzustellen, beispielsweise um den Bilddetektor 107 des Authentifikationsdokuments 100 mit elektrischer Energie zu versorgen.

Gemäß einer Ausführungsform ist die von der Kommunikationsschnittstelle 207 empfangene Bildaufnahme eine binäre Bildaufnahme, insbesondere eine Schwarzweiß-Bildaufnahme, des Dokumentenmerkmals 104. Die Bildaufnahme kann ferner eine gerasterte Bildaufnahme umfassen. Der Prozessor 209 kann ausgebildet sein, eine Strukturanalyse der binären Bildaufnahme durchzuführen, um eine Struktur in der Bildaufnahme zu erfassen. Der Prozessor 209 kann das Authentifikationsdokument 100 und/oder eine dem Authentifikationsdokument 100 zugeordnete Person auf der Basis der erfassten Struktur authentifizieren.

Gemäß einer weiteren Ausführungsform weist das Dokumentenlesegerät 200 in etwa die gleichen geometrischen Ausmaße, insbesondere Umfang und Dicke, wie das Authentifikationsdokument 100, beispielsweise ein Reisepass, auf.

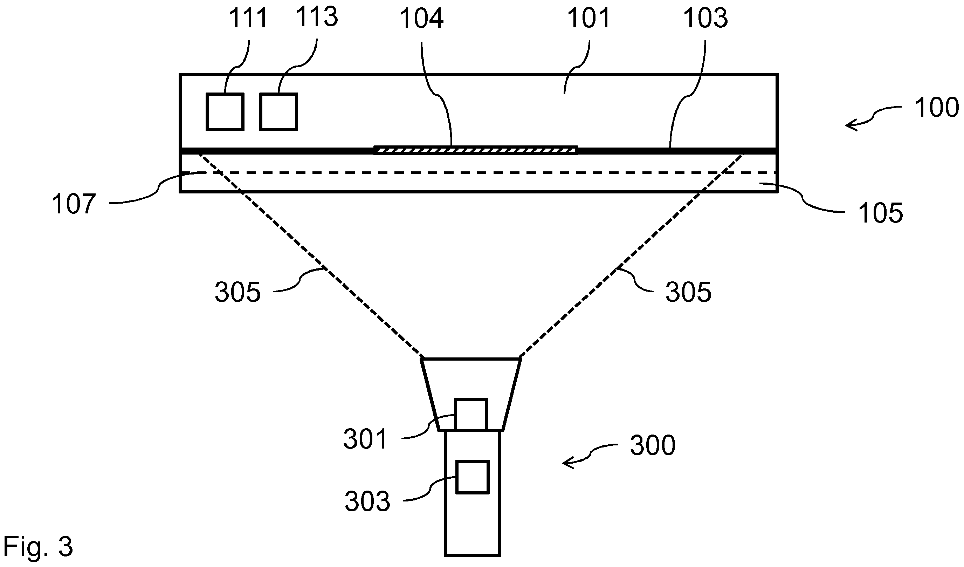

Fig. 3 zeigt eine schematische Darstellung des Authentifikationsdokuments 100, welches mittels einer externen Beleuchtungsvorrichtung 300 beleuchtet wird, gemäß einer Ausführungsform.

Die externe Beleuchtungsvorrichtung 300 kann eine Taschenlampe sein und kann zumindest eine Lichtquelle 301 zum Erzeugen des Beleuchtungslichts 305 aufweisen. Die externe Beleuchtungsvorrichtung 300 kann ferner in ein portables Kommunikationsgerät, beispielsweise ein Smartphone, integriert sein.

Die externe Beleuchtungsvorrichtung 300 kann eine Kommunikationsschnittstelle 303 umfassen.

Die Kommunikationsschnittstelle 303 kann ausgebildet sein, ein Bildaufnahmesignal auszusenden, um das Authentifikationsdokument 100 zur Bildaufnahme anzusteuern. Das Aussenden des Bildaufnahmesignals kann beispielsweise von einem Benutzer der externen Beleuchtungsvorrichtung 300 ausgelöst werden, um einen Authentifizierungsvorgang zu initiieren.

Die externe Beleuchtungsvorrichtung 300 kann ferner über die Kommunikationsschnittstelle 303 Steuersignalen zum Steuern der zumindest einen Lichtquelle 301 empfangen, wobei die Kommunikationsschnittstelle 303 ausgebildet ist, die Steuersignale an die zumindest eine Lichtquelle 301 zum Steuern der zumindest einen Lichtquelle 301 auszusenden. Die Steuersignale können beispielsweise einen Wellenlängenbereich und/oder eine Lichthelligkeit und/oder eine Beleuchtungsdauer der Lichtquelle 301 vorgeben.

Die Lichtquelle 301 kann ausgebildet sein, das Beleuchtungslicht 305 ansprechend auf ein Steuersignal hintereinander in verschiedenen Wellenlängenbereichen, beispielsweise Nahinfrarot, UV-A, Rot, Grün und Blau, zu beleuchten, um Bildaufnahmen des Dokumentenmerkmals 104 bei Beleuchtung mit unterschiedlich farbigen Beleuchtungslicht 305 zu ermöglichen.

Gemäß einer Ausführungsform wird eine Manipulation der Bildaufnahme aufgrund der Anordnung der Bilddetektor 107 in der lichttransparenten Schicht 105 des Authentifikationsdokuments 100 erschwert. So hängt zum Beispiel die Sichtbarkeit des Dokumentenmerkmals 104 in der Bildaufnahme von äußeren Umständen wie dem Beleuchtungslicht 201, 305 ab. Diese äußeren Umstände können bei der Auswertung der Bildaufnahme berücksichtigt werden, so dass eine Fälschung oder Manipulation der Bildaufnahme bzw. des Dokumentenmerkmals 104 erschwert wird.

Gemäß einer Ausführungsform wird eine Fälschung der Bildaufnahme des Dokumentenmerkmals 104, beispielsweise durch ein manipuliertes Authentifikationsdokument 100, ferner dadurch erschwert, dass das Authentifikationsdokument 100, insbesondere ein Prozessor des Authentifikationsdokuments 100, den Wellenlängenbereich des Beleuchtungslichts 201, 305 nicht kennen. Somit kann das Authentifikationsdokument 100 nicht ermitteln, ob ein Dokumentenmerkmal 104 auf der Dokumentenoberfläche 103 in der Bildaufnahme sichtbar ist oder nicht.

Gemäß einer Ausführungsform weist das Authentifikationsdokument 100 kompakte geometrische Ausmaße, insbesondere eine geringe Dicke, auf, da auf eine Beleuchtungseinrichtung in dem Authentifikationsdokument 100 verzichtet werden kann.

Gemäß einer Ausführungsform ist das Authentifikationsdokument 100 gemäß dem Kartenstandard ISO 7810 ID-T, oder einem dünneren Kartenstandard wie ISO 7810 ID-1 ausgebildet. Das Authentifikationsdokument 100 kann insbesondere aufgrund des Verzichts auf eine Beleuchtungseinrichtung im Dokumentenkörper 101 in dem dünneren Standard ISO 7810 ID-1 realisiert werden.

### Bezugszeichenliste

- 100: Authentifikationsdokument
- 101: Dokumentenkörper
- 103: Dokumentenoberfläche
- 104: Dokumentenmerkmal
- 105: lichttransparente Schicht
- 107: Bilddetektor
- 109: weitere lichttransparente Schicht
- 111: Kommunikationsschnittstelle
- 113: Energieversorgungsschnittstelle

- 200: Dokumentenlesegerät
- 201: Beleuchtungslicht
- 203: Auflage
- 205: Beleuchtungseinrichtung
- 207: Kommunikationsschnittstelle
- 209: Prozessor
- 211: Speicher
- 213: Energieversorgungsschnittstelle

- 300: Beleuchtungsvorrichtung
- 301: Lichtquelle
- 303: Kommunikationsschnittstelle
- 305: Beleuchtungslicht

## Patentansprüche

1. Authentifikationsdokument (100), mit:
einem Dokumentenkörper (101) mit einer Dokumentenoberfläche (103), wobei die Dokumentenoberfläche (103) ein Dokumentenmerkmal (104) des Authentifizierungsdokumentes aufweist;
einer lichttransparenten Schicht (105), welche auf der Dokumentenoberfläche (103) des Dokumentenkörpers (101) angeordnet ist, wobei die lichttransparente Schicht (105) einen Bilddetektor (107) für eine Bildaufnahme des Dokumentenmerkmals (104) aufweist; und
einer Kommunikationsschnittstelle (111) zum Ausgeben der Bildaufnahme.

2. Authentifikationsdokument (100) nach Anspruch 1, wobei der Bilddetektor (107) in der lichttransparenten Schicht (105) angeordnet ist, insbesondere eingebettet ist.

3. Authentifikationsdokument (100) nach Anspruch 1 oder 2, wobei der Bilddetektor (107) eine Mehrzahl von Lichtsensoren, insbesondere Fotodioden, eine Fotodioden-Schicht oder eine Transistorschicht, umfasst.

4. Authentifikationsdokument (100) nach Anspruch 3, wobei jeder Lichtsensor des Bilddetektors (107) ausgebildet ist, an einem Abschnitt der Dokumentenoberfläche (103) reflektiertes oder gestreutes Beleuchtungslicht (201) zu detektieren, wobei jeder Lichtsensor ferner ausgebildet ist, ein Detektionssignal auszugeben, wenn eine Intensität des detektierten Beleuchtungslichts (201) einen Schwellwert überschreitet.

5. Authentifikationsdokument (100) nach einem der vorstehenden Ansprüche, wobei die lichttransparente Schicht (105) aus einem transparenten Kunststoff, insbesondere Polycarbonat, aus einer transparenten Lackschicht oder aus Glas gebildet ist.

6. Authentifikationsdokument (100) nach einem der vorstehenden Ansprüche, wobei das Beleuchtungslicht (201) einen Wellenlängenbereich, insbesondere einen Infrarot-Wellenlängenbereich, einen Ultraviolett-Wellenlängenbereich oder einen Weißlicht-Wellenlängenbereich, aufweist, wobei die lichttransparente Schicht (105) in dem Wellenlängenbereich lichttransparent ist.

7. Authentifikationsdokument (100) nach einem der vorstehenden Ansprüche, wobei die lichttransparente Schicht (105) die Dokumentenoberfläche (103) des Dokumentenkörpers (101) vollständig oder abschnittsweise bedeckt.

8. Authentifikationsdokument (100) nach einem der vorstehenden Ansprüche, wobei die Dokumentenoberfläche (103) eine weitere lichttransparente Schicht (109) umfasst oder formt, oder wobei zwischen der Dokumentenoberfläche (103) und der lichttransparenten Schicht (105) eine weitere lichttransparente Schicht (109) angeordnet ist.

9. Authentifikationsdokument (100) nach einem der vorstehenden Ansprüche, wobei das Dokumentenmerkmal (104) eines der folgenden Merkmale umfasst: eine maschinenlesbare Zone, ein Passbild, insbesondere ein Passbild eines Besitzers des Authentifikationsdokuments (100), ein Sicherheitsmerkmal wie ein Hologramm, ein Sicherheitsfaden oder ein Wasserzeichen, eine Beschriftung.

10. Authentifikationsdokument (100) nach einem der vorstehenden Ansprüche, wobei die Kommunikationsschnittstelle (111) ausgebildet ist, ein Bildaufnahmesignal zu empfangen, wobei die Kommunikationsschnittstelle (111) ausgebildet ist, den Bilddetektor (107) ansprechend auf das Empfangen des Bildaufnahmesignals zur Bildaufnahme des Dokumentenmerkmals (104) anzusteuern.

11. Dokumentenlesegerät (200) für ein Authentifikationsdokument (100), wobei das Authentifikationsdokument (100) einen Dokumentenkörper (101) mit einer Dokumentenoberfläche (103) umfasst, wobei die Dokumentenoberfläche (103) ein Dokumentenmerkmal (104) des Authentifizierungsdokumentes aufweist; wobei das Authentifikationsdokument (100) ferner eine lichttransparente Schicht (105) umfasst, welche auf der Dokumentenoberfläche (103) des Dokumentenkörpers (101) angeordnet ist, wobei die lichttransparente Schicht (105) einen Bilddetektor (107) für eine Bildaufnahme des Dokumentenmerkmals (104) aufweist; und wobei das Authentifikationsdokument (100) eine Kommunikationsschnittstelle (111) zum Ausgeben der Bildaufnahme umfasst, wobei das Dokumentenlesegerät (200) die folgenden Merkmale aufweist:
eine Auflage (203) zum Auflegen des Authentifikationsdokuments (100);
eine Beleuchtungseinrichtung (205), welche ausgebildet ist, die lichttransparente Schicht (105) des Authentifikationsdokuments (100) mit Beleuchtungslicht (201) zu durchleuchten; und
eine Kommunikationsschnittstelle (207), welche ausgebildet ist, die Bildaufnahme des Dokumentenmerkmals (104) von dem Authentifikationsdokument (100) zu empfangen.

12. Dokumentenlesegerät (200) nach Anspruch 11, wobei die Beleuchtungseinrichtung (205) ausgebildet ist, strukturiertes Beleuchtungslicht (201) zu erzeugen, wobei das strukturierte Beleuchtungslicht (201) eine Struktur, insbesondere eine räumliche Intensitätsverteilung, aufweist, wobei die Beleuchtungseinrichtung (205) ausgebildet ist, zur Beleuchtung der Dokumentenoberfläche (103) die lichttransparente Schicht (105) mit dem strukturierten Beleuchtungslicht (201) zu durchleuchten.

13. Dokumentenlesegerät (200) nach Anspruch 11 oder 12, wobei die Kommunikationsschnittstelle (207) ausgebildet ist, ein Bildaufnahmesignal auszusenden, um das Authentifikationsdokument (100) zur Bildaufnahme anzusteuern.

14. Dokumentenlesegerät (200) nach einem der Ansprüche 11 bis 13, mit einem Prozessor (209), wobei der Prozessor (209) ausgebildet ist, das Dokumentenmerkmal (104) in der empfangenen Bildaufnahme zu erfassen, und das Authentifikationsdokument (100) oder eine dem Authentifikationsdokument (100) zugeordnete Person auf der Basis des erfassten Dokumentenmerkmals (104) zu authentifizieren.

## Claims

1. An authentication document (100), comprising:
a document body (101) with a document surface (103), wherein the document surface (103) comprises a document feature (104) of the authentication document;
a light-transparent layer (105), which is arranged on the document surface (103) of the document body (101), wherein the light-transparent layer (105) comprises an image detector (107) for recording an image of the document feature (104); and
a communication interface (111) for outputting the image recording.

2. The authentication document (100) according to claim 1, wherein the image detector (107) is arranged, in particular embedded, in the light-transparent layer (105).

3. The authentication document (100) according to claim 1 or 2, wherein the image detector (107) comprises a plurality of light sensors, in particular photodiodes, a photodiode layer or a transistor layer.

4. The authentication document (100) according to claim 3, wherein each light sensor of the image detector (107) is configured to detect illuminating light (201) reflected or scattered at a portion of the document surface (103), wherein each light sensor is further configured to output a detection signal if an intensity of the detected illumination light (201) exceeds a threshold value.

5. The authentication document (100) according to any one of the preceding claims, wherein the light-transparent layer (105) is formed from a transparent plastic, in particular polycarbonate, from a transparent lacquer layer or from glass.

6. The authentication document (100) according to any one of the preceding claims, wherein the illuminating light (201) has a wavelength range, in particular an infrared wavelength range, an ultraviolet wavelength range or a white light wavelength range, wherein the light-transparent layer (105) is light-transparent in the wavelength range.

7. The authentication document (100) according to any one of the preceding claims, wherein the light-transparent layer (105) covers the document surface (103) of the document body (101) completely or in portions.

8. The authentication document (100) according to any one of the preceding claims, wherein the document surface (103) comprises or forms a further light-transparent layer (109), or wherein between the document surface (103) and the light-transparent layer (105) a further light-transparent layer (109) is arranged.

9. The authentication document (100) according to any one of the preceding claims, wherein the document feature (104) comprises one of the following features: a machinereadable zone, a passport photo, in particular a passport photo of an owner of the authentication document (100), a security feature such as a hologram, a security thread or a watermark, a caption.

10. The authentication document (100) according to any one of the preceding claims, wherein the communication interface (111) is configured to receive an image recording signal, wherein the communication interface (111) is configured to control the image detector (107) in response to receiving the image recording signal for image recording the document feature (104).

11. A document reading device (200) for an authentication document (100), wherein the authentication document (100) comprises a document body (101) with a document surface (103), wherein the document surface (103) comprises a document feature (104) of the authentication document; wherein the authentication document (100) further comprises a light-transparent layer (105), which is arranged on the document surface (103) of the document body (101), wherein the light-transparent layer (105) comprises an image detector (107) for an image recording of the document feature (104); and wherein the authentication document (100) comprises a communication interface (111) for outputting the image recording, wherein the document reading device (200) comprises the following features:
a pad (203) for placing the authentication document (100);
an illumination device (205), which is configured to transilluminate the light-transparent layer (105) of the authentication document (100) with illumination light (201); and
a communication interface (207), which is configured to receive the image recording of the document feature (104) from the authentication document (100).

12. The document reading device (200) according to claim 11, wherein the illumination device (205) is configured to generate structured illumination light (201), wherein the structured illumination light (201) has a structure, in particular a spatial intensity distribution, wherein the illumination device (205) is configured to transilluminate the light-transparent layer (105) with the structured illuminating light (201) for illuminating the document surface (103).

13. The document reading device (200) according to claim 11 or 12, wherein the communication interface (207) is configured to emit an image recording signal in order to control the authentication document (100) for image recording.

14. The document reader (200) according to any one of claims 11 to 13, comprising a processor (209), wherein the processor (209) is configured to detect the document feature (104) in the received image recording, and to authenticate the authentication document (100) or a person assigned to the authentication document (100) on the basis of the detected document feature (104).

## Revendications

1. Document d'authentification (100), comprenant :
un corps de document (101) doté d'une surface de document (103), la surface de document (103) présentant une caractéristique de document (104) du document d'authentification ;
une couche transparente à la lumière (105), qui est disposée sur la surface du document (103) du corps de document (101), la couche transparente à la lumière (105) comportant un détecteur d'image (107) pour enregistrer une image du document caractéristique (104); et
une interface de communication (111) pour délivrer l'enregistrement d'image.

2. Document d'authentification (100) selon la revendication 1, dans lequel le détecteur d'image (107) est disposé, notamment noyé, dans la couche transparente à la lumière (105).

3. Document d'authentification (100) selon la revendication 1 ou 2, dans lequel le détecteur d'images (107) comprend une pluralité de capteurs de lumière, notamment des photodiodes, une couche de photodiode ou une couche de transistor.

4. Document d'authentification (100) selon la revendication 3, dans lequel chaque capteur de lumière du détecteur d'image (107) est configuré pour détecter une lumière éclairante (201) réfléchie ou diffusée au niveau d'une section de la surface du document (103), dans lequel chaque lumière le capteur est en outre configuré pour émettre un signal de détection si une intensité de la lumière d'éclairage détectée (201) dépasse une valeur seuil.

5. Document d'authentification (100) selon l'une quelconque des revendications précédentes, dans lequel la couche transparente à la lumière (105) est formée d'un plastique transparent, notamment de polycarbonate, d'une couche de laque transparente ou de verre.

6. Document d' authentification (100) selon l'une quelconque des revendications précédentes, dans lequel la lumière d'éclairage (201) a une plage de longueurs d'onde, en particulier une plage de longueurs d'onde infrarouge, une plage de longueurs d'onde ultraviolette ou une plage de longueurs d'onde de lumière blanche, dans lequel le la couche transparente à la lumière (105) est transparente à la lumière dans la plage de longueurs d'onde.

7. Document d'authentification (100) selon l'une quelconque des revendications précédentes, dans lequel la couche transparente à la lumière (105) recouvre la surface du document (103) du corps du document (101) complètement ou par sections.

8. Document d'authentification (100) selon l'une quelconque des revendications précédentes, dans lequel la surface du document (103) comprend ou forme une autre couche transparente à la lumière (109), ou dans lequel entre la surface du document (103) et la lumière- couche transparente (105), une autre couche transparente à la lumière (109) est disposée.

9. Document d'authentification (100) selon l'une quelconque des revendications précédentes, dans lequel la caractéristique du document (104) comprend l'une des caractéristiques suivantes : une zone lisible par machine, une photo d'identité, notamment une photo d'identité d'un propriétaire de le document d'authentification (100), un élément de sécurité tel qu'un hologramme, un fil de sécurité ou un filigrane, une légende.

10. Document d'authentification (100) selon l'une quelconque des revendications précédentes, dans lequel l'interface de communication (111) est configurée pour recevoir un signal d'enregistrement d'image, dans lequel l'interface de communication (111) est configurée pour contrôler le détecteur d'image (107) en réponse à la réception du signal d'enregistrement d'image pour enregistrer l'image de la caractéristique de document (104).

11. Dispositif de lecture de document (200) pour un document d'authentification (100), dans lequel le document d'authentification (100) comprend un corps de document (101) avec une surface de document (103), dans lequel la surface de document (103) a une caractéristique de document (104) du document d'authentification ; le document d'authentification (100) comprenant en outre une couche transparente à la lumière (105), qui est disposée sur la surface du document (103) du corps de document (101), la couche transparente à la lumière (105) comportant un détecteur d'image ( 107) pour un enregistrement d'image de la caractéristique de document (104) ; et dans lequel le document d'authentification (100) comprend une interface de communication (111) pour délivrer l'enregistrement d'image, dans lequel le dispositif de lecture de document (200) présente les caractéristiques suivantes :
un tampon (203) pour placer le document d'authentification (100) ;
un dispositif d'éclairage (205), qui est configuré pour transéclairer la couche transparente à la lumière (105) du document d'authentification (100) avec une lumière d'éclairage (201) ; et
une interface de communication (207), qui est configurée pour recevoir l'enregistrement d'image de la caractéristique de document (104) à partir du document d'authentification (100).

12. Dispositif de lecture de documents (200) selon la revendication 11, dans lequel le dispositif d'éclairage (205) est configuré pour générer une lumière d'éclairage structurée (201), dans lequel la lumière d'éclairage structurée (201) a une structure, en particulier une distribution d'intensité spatiale., dans lequel le dispositif d'éclairage (205) est configuré pour transéclairer la couche transparente à la lumière (105) avec la lumière d'éclairage structurée (201) pour éclairer la surface du document (103).

13. Dispositif de lecture de document (200) selon la revendication 11 ou 12, dans lequel l'interface de communication (207) est configurée pour émettre un signal d'enregistrement d'image afin de contrôler le document d'authentification (100) pour l'enregistrement d'image.

14. Lecteur de documents (200) selon l'une quelconque des revendications 11 à 13, comprenant un processeur (209), dans lequel le processeur (209) est configuré pour détecter la caractéristique du document (104) dans l'enregistrement d'image reçu, et pour authentifier le document d'authentification (100) ou une personne affectée au document d'authentification (100) sur la base de la caractéristique de document détectée (104).
